# EUROPEAN PATENT APPLICATION

(11) **EP 1 772 598 A2**
(43) Date of publication of application: **11.04.2007**
(21) Application number: 06255147.8
(22) Date of filing: 05.10.2006
(51) Int. Cl.: F01N 1/16

(54) **Exhaust valve bushing**

(30) Priority: 06.10.2005 US 244783 P
(71) Applicant: Arvin Technologies, Inc., Troy, MI 48084-7186 (US)
(72) Inventor: Abram, Kwin, Columbus, Indiana 47201 (US); Callahan, Joseph, Greenwood, Indiana 46143 (US); Hahnl, Wolfgang, 04668 Grimma (DE); Lesch, Jürgen, 86163 Augsburg (DE); Regenold, Klaus, 86316 Friedberg (DE); Schwinn, Jochen, 86153 Augsburg (DE)
(74) Representative: Jones, John Bryn

(57) **Abstract**

A bushing assembly for an exhaust valve includes a first bushing component formed from a first material that provides a low friction surface and a second bushing component formed from a second material that provides noise damping. The first and second bushing components are supported by a shaft that rotates an exhaust valve positioned within an exhaust component. An actuator is coupled to the shaft to pivot the exhaust valve within an exhaust component to vary exhaust flow. As the shaft rotates, the first and second bushing components cooperate to provide a good bearing surface in combination with noise dampening during valve actuation.

## Description

### TECHNICAL FIELD

The subject invention relates to a bushing assembly for an exhaust valve, which utilizes one type of material to provide a low friction surface and a different type of material to provide noise dampening.

### BACKGROUND OF THE INVENTION

Noise attenuation valves are often used in vehicle exhaust systems to reduce noise generated during vehicle operation. A noise attenuation valve typically includes a flapper valve mounted on a shaft that pivots the flapper valve within an inlet tube formed within an exhaust component, such as a muffler for example. The flapper valve has a disc shaped body that rotates within the inlet tube to vary exhaust gas flow area. The shaft is supported on a bushing that provides a bearing surface as the shaft rotates relative to a housing. The shaft is coupled by a linkage assembly to an actuator, which controls movement of the shaft. As the shaft rotates, the flapper valve varies the exhaust gas flow area as needed to attenuate noise.

One disadvantage with this traditional configuration is that components in the noise attenuation valve and actuator generate operational noise. One type of noise is a squeaking noise that is caused by motion between the shaft or housing and the bearing surface. Another type of noise is referred to as impact noise. Impact noise is generated by the impact of the shaft to the bushing, or of the bushing to the housing, at extreme limits of the actuator's travel.

Traditionally, two different types of bushings have been used. One known bushing is comprised of a wire mesh material. Wire mesh bushings provide good noise damping characteristics for impact noise but have a high level of friction at the bearing surface, and friction causes squeaking. Further, wire mesh bushings have poor attrition characteristics, i.e. are more likely to wear or deteriorate quickly.

In another known configuration, ceramic bushings are used. Solid ceramic bushings have a low level of friction at the bearing surface, which minimizes squeaking. However, due to the solid configuration of the ceramic bushing, all of the impact noise is transmitted through the ceramic bushing.

Another problem with solid ceramic bushings is thermal growth. Ceramic material has a lower thermal expansion than steel, which is typically used to form the housing. Due to this difference in thermal expansion, impact noise is greater when the exhaust component is cold, and disadvantageously the bushing can become loose within the housing when the exhaust component is hot.

Thus, it is desirable to provide a bushing assembly for an exhaust valve that reduces operational noises and provides a good bearing surface.

### SUMMARY OF THE INVENTION

The subject invention provides a bushing assembly for an exhaust valve that is supported on a shaft. The bushing assembly allows the shaft to rotate the exhaust valve relative to a non-rotating exhaust component. The bushing assembly includes a first bushing component that provides a low friction bearing surface and a second bushing component that provides improved noise damping characteristics. The first bushing component is preferably a solid component formed from a material such as a ceramic or sintered metal material, and the second bushing component is preferably a non-solid component formed from a wire mesh material, for example.

In one example embodiment, the second bushing component substantially surrounds the first bushing component. The first bushing component receives the shaft and the second bushing component is positioned between the first bushing component and the non-rotating exhaust component. In another example embodiment, the first bushing component surrounds a first portion of the shaft and the second bushing component surrounds a second portion of the shaft that is axially spaced from the first portion.

In either configuration, the material of the first bushing component provides the low friction bearing surface to reduce squeaking noise, and the material of the second bushing component provides good noise damping characteristics for impact noise. The material of the second bushing component also accommodates differences in thermal expansion between the first material and steel material used to form the non-rotating exhaust component.

These and other features of the present invention can be best understood from the following specification and drawings, the following of which is a brief description.

### BRIEF DESCRIPTION OF THE DRAWINGS

Figure 1 is a schematic view of an exhaust system with a bushing assembly incorporating the subject invention.
Figure 2 is a cross-sectional view taken along plane 2-2 in Figure 1.
Figure 3 is a schematic view of another embodiment of an exhaust valve with a bushing assembly incorporating the subject invention.

### DETAILED DESCRIPTION OF THE PREFERRED EMBODIMENT

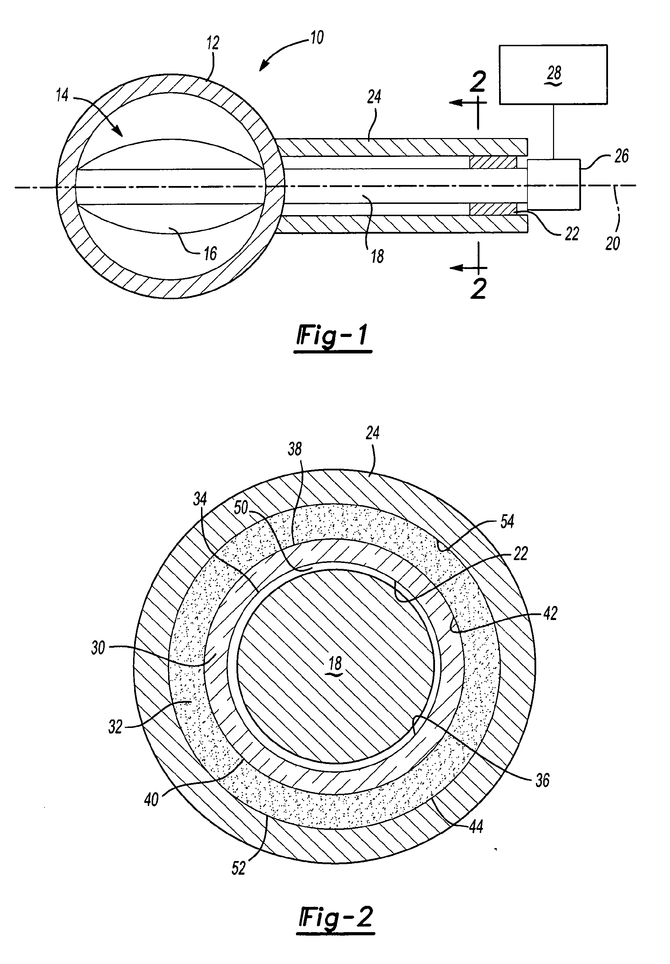

An exhaust system 10 is shown in Figure 1. The exhaust system 10 includes an exhaust component 12, such as an inlet tube for a muffler for example, that directs the flow of exhaust gases from an engine (not shown). A noise attenuation valve 14 is positioned within the exhaust component 12 to reduce noise generated during vehicle operation. The noise attenuation valve 14 can be configured as an electric or vacuum type valve.

In the example shown, the noise attenuation valve 14 includes a flapper valve body 16 mounted on a shaft 18 that pivots the flapper valve body 16 within the exhaust component 12 about an axis 20. The flapper valve body 16 is usually a disc-shaped body and rotates within the exhaust component 12 to vary exhaust gas flow area.

The shaft 18 is supported on a bushing assembly 22 that provides a bearing surface as the shaft 18 rotates relative to a housing 24. The shaft 18 is coupled by a linkage assembly 26 to an actuator 28, which controls movement of the shaft 18. As the shaft 18 rotates, the flapper valve body 16 varies the exhaust gas flow area as needed to attenuate noise. The actuator 28 is preferably a solenoid actuator that is controlled by a controller, however, other actuators could also be used.

The bushing assembly 22 supports the shaft 18 for rotation relative to the housing 24 about the axis 20. The actuator 28 typically rotates or pivots the shaft 18 via the linkage assembly 26 back and forth between travel limit stops. In the example of a solenoid actuator, a plunger would move the linkage assembly 26 to a first maximum travel limit during extension in one direction, and would move the linkage assembly 26 to a second maximum travel limit during retraction in an opposite direction. When the actuator 28 reaches these travel limit stops, impact noise is generated.

The bushing assembly 22 is uniquely configured to reduce this impact noise. As shown in Figure 2, the bushing assembly 22 includes an inner component 30 that receives the shaft 18, and an outer component 32 that surrounds the inner component 30. The inner component 30 is formed as a solid component from a material such as ceramic or sintered metal. The outer component 32 is as a non-solid component from a material such as wire mesh. The wire mesh is preferably formed as a mesh mat similar to that of a Brillo^{™} pad configuration. Any type of ceramic or sintered metal material could be used to form the inner component 30 and any type of wire mesh material could be used to form the outer component 32.

The inner component 30 includes a center bore 34 that defines a friction bearing inner surface 36. The inner component 30 also includes an outer surface 38 that directly engages the outer component 32. The outer component 32 includes a center bore 40 that defines an inner surface 42, and includes an outer surface 44 that directly engages the housing 24. The inner surface 42 of the outer component 32 preferably engages the outer surface 38 of the inner component 30 about an entire circumference of the inner component 30.

The shaft 18 is received within the center bore 34 of the inner component 30 in a loose-fit, such that a clearance 50 is maintained between at least a portion of the inner surface 42 of the outer component 32 and the outer surface 38 of the inner component 30. This clearance 50 is very small and is provided to account for growth of the shaft 18 during high temperatures. The clearance 50 in Figure 2 is exaggerated for clarity purposes.

The housing 24 includes a housing bore 52 defined by an inner surface 54. The outer component 32 is received within the housing bore 52 in a slight interference fit. Thus, the inner surface 54 of the housing bore 52 directly engages the outer surface 44 of the outer component 32.

The housing 24 and the shaft 18 are preferably formed from steel material as known. The inner component 30 of the bushing assembly 22, which is formed from a ceramic material or sintered metal material, has a lower thermal expansion coefficient than steel material used to form the housing 24 and shaft 18. The outer component 32 of the bushing assembly 22, which is formed from the wire mesh material, accommodates for these differences in thermal expansion coefficients. If the housing 24 is at a high temperature, the housing will tend to grow in size, which will compress the wire mesh material from an initial configuration. When the housing 24 is cooled, the housing 24 shrinks and the wire mesh material can expand to achieve the initial configuration.

The wire mesh material of the outer component 32 also reduces the effects of impact noise. Because the outer component is not solid, i.e. is formed from a mesh material, impact noise is easily dissipated.

The ceramic or sintered metal material of the inner component 30 provides a very low friction bearing surface for the shaft 18. This low friction bearing surface reduces or eliminates any squeaking noise that may be generated by motion between the shaft 18 or housing 24 and the bushing assembly 22. Thus, the bushing assembly 22 provides a low-friction bearing surface in addition to providing excellent noise damping characteristics for squeaking and impact noises.

The bushing assembly 22 can be positioned at any of various locations along the shaft 18. Further, while only one bushing assembly 22 is shown, additional bushing assemblies 22 could be mounted on the shaft at various locations as needed.

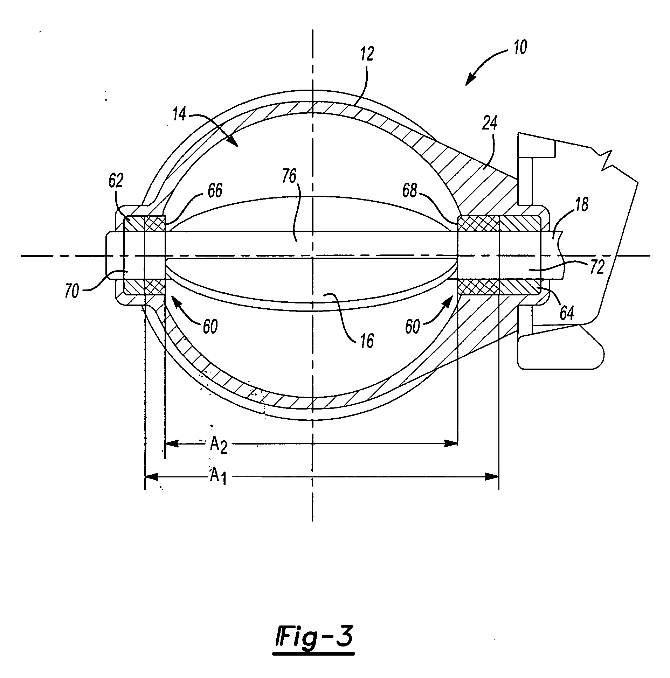

Figure 3 shows another example of a bushing assembly 60. In this bushing configuration, the bushing assembly includes first 62 and second 64 bushing components formed of a first material, and third 66 and fourth 68 bushing components formed from a second material. The first 62 and second 64 bushing components are formed as solid components from a material such as sintered metal or ceramic, for example. The third 66 and fourth 68 bushing components are formed as non-solid components from a wire mesh material as described above.

The first 62, second 64, third 66, and fourth 68 bushing components are all mounted to support the shaft 18 for rotation relative to the housing 24. The first 62, second 64, third 66, and fourth 68 bushing components are axially spaced apart from each other along the axis 20. Preferably, the first 62 and third 66 bushing components are mounted along a first shaft segment 70 and the second 64 and fourth 68 bushing components are mounted along a second shaft segment 72.

The first 70 and second 72 shaft segments are separated from each other by a third shaft segment 76. The flapper valve body 16 is supported on the shaft 18 at the third shaft segment 76.

Inward facing side edges of the first 62 and second 64 bushing components are separated from each other by a first axial distance A₁ along the axis 20, and inward side edges of the third 66 and fourth 68 bushing components are separated from each other by a second axial distance A₂ along the axis 20. The second axial distance A₂ is less than the first axial distance A₁. In other words, the third 66 and fourth 68 bushing components are both positioned inwardly of the first 62 and second 64 bushing components.

In the example shown, the second 64 and fourth 68 bushing components have a longer bore length than the first 62 and third 66 bushing components. Bore lengths for the first 62, second 64, third 66, and fourth 68 bushing components can be varied as needed. Further, while four (4) bushing components are shown in Figure 3, it should be understood that additional bushing components or fewer bushing components could be incorporated into the exhaust component 12 as needed. However, at least one bushing component formed from the sintered metal or ceramic material should be used in combination with at least one bushing component formed from the wire mesh material.

In either bushing configuration, i.e. with bushing assembly 22 or 60, the ceramic or sintered metal material provides a low friction bearing surface to reduce squeaking noise, and the wire mesh material provides good noise damping characteristics for impact noise. The wire mesh material also accommodates differences in thermal expansion between the ceramic and sintered metal material and steel material used to form the housing 24. Further, it should be understood that while the subject bushing assembly 22, 60 is shown as being used in a noise attenuation valve 14 positioned in an inlet tube for a muffler, the bushing assembly 22, 60 could also be used for valves located in other types of exhaust components.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A bushing assembly for an exhaust system comprising:
at least one first bushing component adapted to receive a rotating exhaust component that rotates relative to a non-rotating exhaust component, said at least one first bushing component being formed from a first material that provides a low friction surface for the rotating exhaust component; and
at least one second bushing component formed from a second material different than said first material wherein said second material provides noise damping as the rotating exhaust component moves relative to the non-rotating exhaust component.

2. The bushing assembly according to claim 1 wherein said at least one second bushing component substantially surrounds said at least one first bushing component.

3. The bushing assembly according to any preceding claim wherein said at least one first bushing component receives the rotating exhaust component in a loose fit such that a clearance is provided between an inner surface of said at least one first bushing component and at least a portion of an outer surface of the rotating exhaust component.

4. The bushing assembly according to any preceding claim wherein said at least one second bushing component is received in an interference fit between said at least one first bushing component and the non-rotating exhaust component such that said at least one second bushing component directly engages an inner surface of the non-rotating exhaust component and directly engages an outer surface of said at least one first bushing component.

5. The bushing assembly according to any preceding claim wherein the rotating exhaust component comprises a shaft connected to an exhaust valve and the non-rotating exhaust component comprises a housing.

6. The bushing assembly according to claim 1 wherein said at least one first bushing component surrounds a first portion of the rotating exhaust component and said at least one second bushing component surrounds a second portion of the rotating exhaust component that is axially spaced from the first portion.

7. The bushing assembly according to claim 6 wherein said at least one first bushing component comprises a first bushing and a second bushing and wherein said at least one second bushing component comprises a third bushing and a fourth bushing, said first and said third bushings mounted adjacent to each other along a first segment of the rotating exhaust component and said second and said fourth bushings mounted adjacent to each other along a second segment of the rotating exhaust component, and wherein the first and the second segments are separated by a valve body supported on the rotating exhaust component.

8. An exhaust system comprising:
a shaft that supports an exhaust valve for pivotal movement within an exhaust component;
a bushing assembly supporting said shaft for rotation relative to a housing; and
an actuator coupled to said shaft to move said exhaust valve within said exhaust component to vary exhaust flow, wherein said bushing assembly includes at least one first bushing component comprised of a first material that provides a low friction surface for said shaft and includes at least one second bushing component comprised of a second material that provides noise damping during actuation of said exhaust valve.

9. The exhaust system according to claim 8 wherein said at least one second bushing component substantially surrounds said at least one first bushing component with said at least one second bushing component being received in an interference fit between said at least one first bushing component and said housing such that said at least one second bushing component directly engages an inner surface of said housing and directly engages an outer surface of said at least one first bushing component.

10. The exhaust system according to claim 8 or 9 wherein said at least one first bushing component includes a bore that receives said shaft in a loose fit.

11. The exhaust system according to claim 8 wherein said shaft defines an axis of rotation and wherein said at least one first bushing component surrounds a first portion of said shaft and said at least one second bushing component surrounds a second portion of said shaft that is axially spaced from said first portion along said axis of rotation.

12. The exhaust system according to claim 8 wherein said at least one first bushing component comprises a first bushing and a second bushing and wherein said at least one second bushing component comprises a third bushing and a fourth bushing, said first and said third bushings mounted adjacent to each other along a first shaft segment and said second and said fourth bushings mounted adjacent to each other along a second shaft segment, and wherein said first and said second shaft segments are separated by a third shaft segment that supports said exhaust valve.

13. The exhaust system according to claim 12 wherein said first and said second bushings are spaced apart from each other by a first axial distance along said axis of rotation and said third and fourth bushings are spaced apart from each other by a second axial distance along said axis of rotation, said second axial distance being less than said first axial distance.

14. The exhaust system according to claim 8 wherein said housing has a first coefficient of thermal expansion and said at least one first bushing component has a second coefficient of thermal expansion different from said first coefficient of thermal expansion and wherein said at least one second bushing component is resilient to accommodate differences between the first and second coefficients of thermal expansion.

15. The bushing assembly according to any one of claims 1 to 7 or the exhaust system according to any one of claims 8 to 14 wherein said at least one first bushing component is solid and said at least one second bushing component is non-solid.

16. The bushing assembly according to any one of claims 1 to 7 or 15 or the exhaust system according to any one of claims 8 to 15 wherein said first material comprises a ceramic material or a sintered metal material and/or said second material comprises a wire mesh material.
